# EUROPEAN PATENT SPECIFICATION

(11) **EP 1 972 188 B1**
(45) Date of publication and mention of the grant of the patent: **22.12.2010**
(21) Application number: 08101980.4
(22) Date of filing: 26.02.2008
(51) Int. Cl.: A01B 59/041

(54) **Sway block of a three-point implement hitch**
Querblock eines Dreipunkt-Einsatzanhängers
Bloc de balancement d'un crochet à mise en oeuvre en trois points

(30) Priority: 20.03.2007 IT BO20070200
(43) Date of publication of application: 24.09.2008
(73) Proprietor: CNH Italia S.p.A., 41100 Modena (IT)
(72) Inventor: Ferri, Mauro, 41017 Ravarino-Modena (IT)
(74) Representative: CNH IP Department

(56) References cited:
- US-A- 4 116 458
- US-A- 4 601 486
- US-A- 4 790 557
- US-A- 5 201 539

## Description

### Field of the invention

The present invention relates to a sway block of a three-point implement hitch.

### Background of the invention

Though the teachings of the present invention apply to all types of agricultural implement three-point hitches, the sway block according to the present invention is particularly suitable for small farm tractors used in orchards and vineyards, or so-called "compact tractors".

One of the drawbacks of currently used sway blocks lies in their being manoeuvred and adjusted at the bottom of the implement hitch.

When the implement is attached, however, manoeuvring the sway block may prove awkward and extremely dangerous to the operator. In fact, if adjusting the implement hitch by inserting a hand inside the space housing, any undesired lateral movement of the hitch could result in crushing of the operator's hand.

US-A-2.501.239, on which the preamble of claim 1 is based, shows a sway block embodiment of an agricultural vehicle comprising two lock members which are each suspended from a single lever. At their lower side, the lock members are rigidly connected to each other so as to move in unison to the one or other side. A hydraulic actuator is provided transversely of the vehicle to move one of the lock members in contact with a lower arm of a three-point hitch while retracting the other lock member from the other lower arm. To prevent unwanted fore-and-aft movement of the lock members and the actuator relative to the vehicle, a rod is provided which is slidably received in two slots. Such an arrangement of parts makes the embodiment complex and vulnerable due to wear.

### Object of the invention

It is therefore an object of the present invention to provide a safe, easy-to-manoeuvre sway block designed to eliminate the aforementioned drawbacks.

A further advantage of the invention lies in the sway block performing the dual function of supporting the tow hook and preventing sway of the bottom arms of a three-point farm implement hitch.

The main advantage of the present invention lies in enabling manoeuvre and adjustment of the sway block from above, or even from the driver's cab.

Another advantage of the invention lies in reducing the width of the sway block, which is extremely important in the case of small tractors (for orchards, vineyards, etc.) which are narrower than multipurpose or standard tractors.

It is therefore an object of the present invention to provide a sway block for a three-point farm implement hitch, designed to eliminate the aforementioned drawbacks.

### Summary of the invention

According to the present invention, there is provided a sway block as claimed in the accompanying claims.

### Brief description of the drawings

The invention will now be described further, by way of example, with reference to the accompanying drawings, in which:
Figure 1 shows a schematic first view in perspective of a preferred embodiment of a sway block in accordance with the present invention;
Figure 2 shows a second view in perspective of the Figure 1 sway block;
Figure 3 shows a first view in perspective of the Figure 1 and 2 sway block fitted to a three-point farm implement hitch;
Figure 4 shows a second view in perspective of the Figure 1 and 2 sway block fitted to a three-point farm implement hitch.

### Description of the preferred embodiment

With reference to the attached drawings, number 100 indicates as a whole a sway block in accordance with the invention, fitted to a three-point hitch AT of a farm implement AA (not shown).

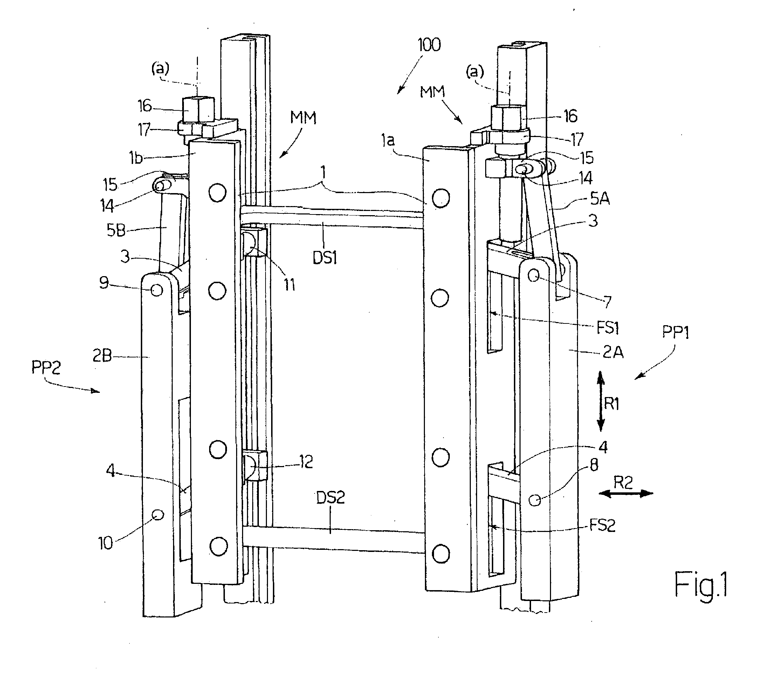

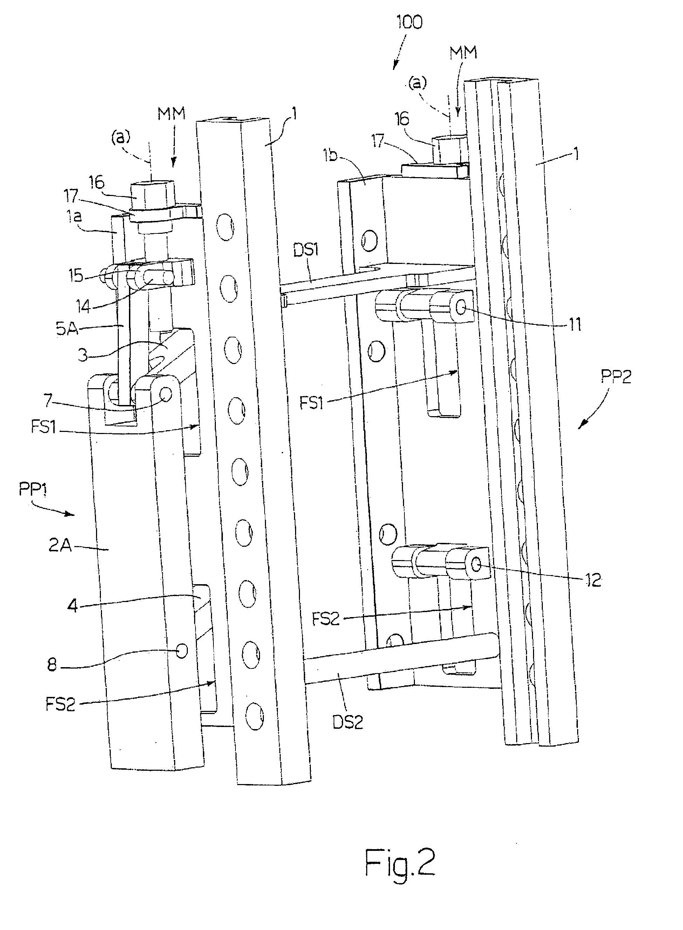

As shown particularly in Figures 1 and 2, sway block 100 comprises a supporting frame 1, for a tow hook (not shown), integral with the rear of a tractor (not shown) and in turn comprising two substantially parallel right-angle plates 1a, 1b spaced apart by two spacers DS1, DS2.

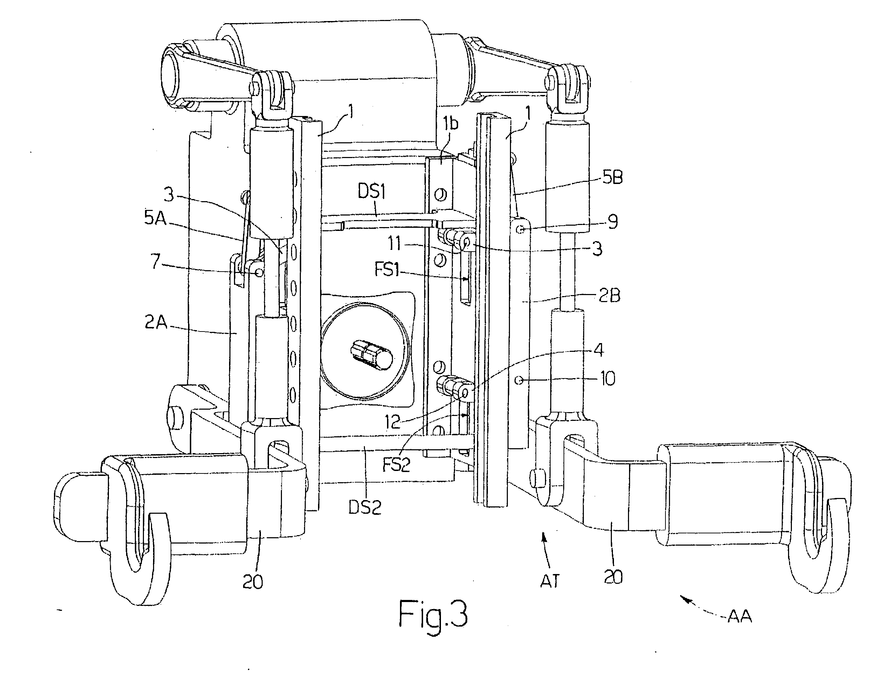

Two levers 3, 4 are hinged to each right-angle plate 1a, 1b by respective pins 11, 12 (see Figures 2, 3). To reduce the overall width of sway block 100 as a whole, pins 11, 12 are advantageously housed inside the space defined by the two right-angle plates 1a, 1b.

To permit rotation of levers 3, 4, two slots FS1, FS2 are formed in each right-angle plate 1a, 1b. The two levers 3, 4 of right-angle plate 1a are hinged to a respective lock member 2A by respective pins 7, 8.

Similarly, the two levers 3, 4 of right-angle plate 1b are hinged to a respective lock member 2B by respective pins 9, 10. Levers 3, 4 of right-angle plate 1a and lock member 2A combine to form a first articulated parallelogram PP1. Similarly, levers 3, 4 of right-angle-plate 1b and lock member 2B combine to form a second articulated parallelogram PP2.

By virtue of articulated parallelograms PP1 and PP2, lock members 2A and 2B move vertically up and down in the direction shown by a first two-way arrow R1, and move back and forth in the direction shown by a second two-way arrow R2.

As shown particularly in Figures 1 and 2, levers 5A and 5B are hinged to pins 7 and 9 respectively. Each lever 5A, 5B is hinged to a respective pin 14 fitted to a respective slide 15 movable up and down in the direction indicated by two-way arrow R1. Any type of actuating mechanism can be used to move each slide 15 up and down.

In the embodiment shown in the attached drawings, an actuating mechanism MM comprises two screws 16 with a vertical axis (a). Each screw 16 is supported by a respective fixed drilled bush 17 integral with a respective right-angle plate 1a, 1b of supporting frame 1.

When the operator (not shown), working from above, tightens/loosens screws 16 (which react on fixed drilled bushes 17), slides 15 move as shown by arrow R1, thus also moving pins 14, about which respective levers 5A, 5B rotate and move, thus also moving respective articulated parallelograms PP1, PP2.

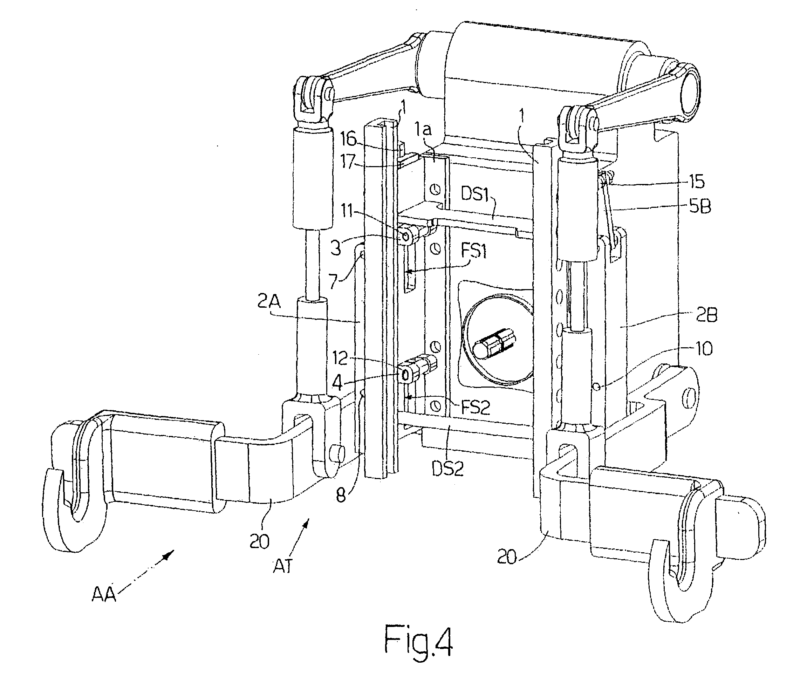

As they move vertically upwards (in one of the two directions indicated by arrow R1), lock members 2A, 2B also move outwards to lock the two bottom arms 20 of three-point implement hitch AT (Figures 3, 4), thus achieving the desired effect.

## Claims

1. A sway block (100) of a three-point hitch (AT) of an agricultural implement (AA); the sway block (100) comprising a supporting frame (1) supporting a tow member and having two lock members (2A, 2B) for preventing sway of the three-point hitch (AT); and
**characterized in that** each lock member (2A, 2B) is hingeably connected to the supporting frame (1) by means of two levers (3,4); each pair of levers (3, 4) and the relative lock member (2A, 2B) forming a respective articulated parallelogram (PP1, PP2) and each lock member (2A, 2B) having an actuating mechanism (MM) for moving the lock member (2A, 2B) between a locking and non-locking position of the three-point hitch (AT).

2. A sway block (100) as claimed in claim 1, wherein the lock members (2A, 2B) lock the bottom arms (20) of said three-point hitch (AT).

3. A sway block (100) as claimed in claim 1 or 2, wherein each actuating mechanism (MM) is operable from above.

4. A sway block (100) as claimed in any of the preceding claims, wherein the lock members (2A, 2B) are independently moveable by their associated actuating mechanism (MM).

5. A sway block (100) as claimed in any of the preceding claims, wherein the supporting frame (1) comprises two substantially parallel right-angle plates (1a, 1b) and said pair of levers (3, 4) being hinged to each right-angle plate (1a, 1b) by pins (11, 12).

6. A sway block (100) as claimed in claim 5, wherein the pins (11, 12) are housed in the space defined by the two right-angle plates (1a, 1b).

7. A sway block (100) as claimed in any of the claims 5 or 6, wherein two slots (FS1, FS2) are formed in each right-angle plate (1a, 1b) to permit rotation of the levers (3, 4).

8. A sway block (100) as claimed in any of the preceding claims, wherein each actuating mechanism (MM) comprises a lever (5A; 5B), a slide (15), and a screw (16).

9. A sway block (100) as claimed in claim 8, wherein each screw (16) is supported by a respective drilled bush (17) integral with a respective right-angle plate (1a, 1b).

## Patentansprüche

1. Schwenkblock (100) einer Dreipunkt-Anhängekupplung (AT) eines landwirtschaftlichen Arbeitsgerätes (AA); wobei der Schwenkblock (100) einen Tragrahmen (1) umfasst, der ein Zugelement trägt und zwei Verriegelungselemente (2A, 2B) zum Verhindern eines Schwenkens der Dreipunkt-Anhängekupplung (AT) aufweist; und
**dadurch gekennzeichnet, dass** jedes Verriegelungselement (2A, 2B) gelenkig mit dem Tragrahmen (1) über zwei Hebel (3, 4) verbunden ist; dass jedes Paar von Hebeln (3, 4) und das zugehörige Verriegelungselement (2A, 2B) ein jeweiliges Gelenkparallelogram (PP1, PP2) bildet und jedes Verriegelungselement (2A, 2B) einen Betätigungsmechanismus (MM) zum Bewegen des Verriegelungselementes (2A, 2B) zwischen einer verriegelnden und einer nicht verriegelnden Position der Dreipunkt-Anhängekupplung (AT) aufweist.

2. Schwenkblock (100) nach Anspruch 1, bei dem die Verriegelungselemente (2A, 2B) die unteren Arme (20) der Dreipunkt-Anhängekupplung (AT) verriegeln.

3. Schwenkblock (100) nach Anspruch 1 oder 2, bei dem jeder Betätigungsmechanismus (MM) von oben her betätigbar ist.

4. Schwenkblock (100) nach einem der vorhergehenden Ansprüche, bei dem die Verriegelungselemente (2A, 2B) unabhängig durch ihren zugehörigen Betätigungsmechanismus (MM) bewegbar sind.

5. Schwenkblock (100) nach einem der vorhergehenden Ansprüche, bei dem der Tragrahmen (1) zwei im Wesentlichen parallele rechtwinklige Platten (1a, 1 b) umfasst und das Paar von Hebeln (3, 4) gelenkig an jeder rechtwinkligen Platte (1a, 1 b) über Bolzen (11, 12) befestigt ist.

6. Schwenkblock nach Anspruch 5, bei dem die Bolzen (11, 12) in dem Raum untergebracht sind, der durch die zwei rechtwinkligen Platten (1 a, 1 b) begrenzt ist.

7. Schwenkblock (100) nach einem der Ansprüche 5 oder 6, bei dem zwei Schlitze (FS1, FS2) in jeder rechtwinkligen Platte (1 A, 1 B) ausgebildet sind, um eine Drehung der Hebel (3, 4) zu ermöglichen.

8. Schwenkblock (100) nach einem der vorhergehenden Ansprüche, bei dem jeder Betätigungsmechanismus (MM) einen Hebel (5A; 5B), einen Schieber (15) und eine Schraube (16) umfasst.

9. Schwenkblock (100) nach Anspruch 8, bei dem jede Schraube (16) in einer jeweiligen gebohrten Büchse (17) gehaltert ist, die einstückig mit einer jeweiligen rechtwinkligen Platte (1a, 1b) ausgebildet ist.

## Revendications

1. Bloc stabilisateur (100) d' un attelage trois points (AT) d' un outil agricole (AA), le bloc stabilisateur (100) comprenant un bâti de support (1) supportant un élément de traction et comportant deux éléments de verrouillage (2A, 2B) pour empêcher l'oscillation de l' attelage trois points (AT), et
**caractérisé en ce que** chaque élément de verrouillage (2A, 2B) est relié de manière articulée au bâti de support (1) au moyen de deux leviers (3,4), chaque paire de leviers (3, 4) et l' élément de verrouillage respectif (2A, 2B) formant un parallélogramme articulé respectif (PP1, PP2) et chaque élément de verrouillage (2A, 2B) comportant un mécanisme d' actionnement (MM) pour déplacer l' élément de verrouillage (2A, 2B) entre une position de verrouillage et une position de non-verrouillage de l' attelage trois points (AT).

2. Bloc stabilisateur (100) selon la revendication 1, **caractérisé en ce que** les éléments de verrouillage (2A, 2B) verrouillent les bras inférieurs (20) de l' attelage trois points (AT).

3. Bloc stabilisateur (100) selon la revendication 1 ou 2, **caractérisé en ce que** chaque mécanisme d' actionnement (MM) est commandable de dessus.

4. Bloc stabilisateur (100) selon l' une quelconque des revendications précédentes, **caractérisé en ce que** les éléments de verrouillage (2A, 2B) peuvent être déplacés indépendamment par leur mécanisme d' actionnement associé (MM).

5. Bloc stabilisateur (100) selon l' une quelconque des revendications précédentes, **caractérisé en ce que** le bâti de support (1) comprend deux plaques à angle droit sensiblement parallèles (1a, 1b), ladite paire de leviers (3, 4) étant articulée sur chaque plaque à angle droit (1a, 1b) par des broches (11, 12).

6. Bloc stabilisateur (100) selon la revendication 5, **caractérisé en ce que** les broches (11, 12) sont logées dans l' espace défini par les deux plaques à angle droit (1a, 1b).

7. Bloc stabilisateur (100) selon l' une quelconque des revendications 5 ou 6, **caractérisé en ce que** deux rainures (FS1, FS2) sont formées dans chaque plaque à angle droit (1a, 1b) pour permettre la rotation des leviers (3, 4).

8. Bloc stabilisateur (100) selon l' une quelconque des revendications précédentes, **caractérisé en ce que** chaque mécanisme d' actionnement (MM) comprend un levier (5A, 5B), un coulisseau (15), et une vis (16).

9. Bloc stabilisateur (100) selon la revendication 8, **caractérisé en ce que** chaque vis (16) est supportée par une douille percée respective (17) solidaire d' une plaque à angle droit respective (1a, 1b).
